# EUROPÄISCHE PATENTANMELDUNG

(11) **EP 4 570 495 A1**
(43) Veröffentlichungstag der Anmeldung: **18.06.2025**
(21) Anmeldenummer: 23217150.4
(22) Anmeldetag: 15.12.2023
(51) Int. Cl.: B32B 21/13, B32B 3/14, B32B 3/18, B32B 3/26, B32B 7/03, B32B 7/05, B32B 7/12, B32B 21/04

(54) **PARKETTDIELE UND VERFAHREN ZU DEREN HERSTELLUNG**

(71) Anmelder: Scheucher Holzindustrie GmbH, 8092 Mettersdorf (AT)
(72) Erfinder: Kaufmann, Karl, 8092 Mettersdorf am Saßbach (AT)
(74) Vertreter: Puchberger & Partner Patentanwälte

(57) **Zusammenfassung**

Die Erfindung betrifft ein Verfahren zur Herstellung einer Parkettdiele (1), umfassend oder bestehend aus einer Deckschicht (2), sowie einer an der Deckschicht (2) angeordneten Stabilisierungslage (3), wobei die Stabilisierungslage (3) eine Vielzahl an winkelig, insbesondere quer, zur Längserstreckungsrichtung (5) der Parkettdiele (1) angeordneten Stäben (6) umfasst, wobei die Stäbe (6) aus zwei Bretteilen (11a, 11b) gebildet werden. Die Erfindung betrifft ferner eine Parkettdiele und eine Anlage.

## Beschreibung

Die vorliegende Erfindung betrifft unter anderem eine Parkettdiele und ein Verfahren zu deren Herstellung. Ferner werden eine Anlage zur Herstellung einer Parkettdiele, ein Verfahren zur Herstellung eines Endlosbretts und andere Aspekte beschrieben.

Im Stand der Technik sind unterschiedliche Arten von Bodenbelägen bekannt, die jeweils unterschiedliche Eigenschaften bieten. Neben Teppichen, Vinyl- und Laminatböden und Fliesen ist Naturholzparkett eine weit verbreitete Art des Bodenbelags. Eine spezifische Art von Naturholzparkett ist mehrlagiges Fertigparkett, welches aus mehreren Holzschichten besteht. Es handelt sich um eine Variante von traditionellem Massivholzparkett, die einige Vorteile bietet.

Fertigparkett umfasst in der Ausführung des 3-Schicht-Fertigparketts drei Schichten. Die oberste Schicht, auch Nutzschicht oder Deckschicht genannt, besteht aus Massivholz, gegebenenfalls mit einer Oberflächenbehandlung. Zur Herstellung der Deckschicht werden oft Hartholzarten wie Eiche, Buche, Ahorn oder Nussbaum eingesetzt. Diese Schicht stellt nach der Verlegung des Parketts die sichtbare Oberfläche dar.

Unter der Deckschicht ist eine Mittellage angeordnet, die oft aus Massivholzstäben gebildet ist. Diese Stäbe sind quer zur Längserstreckungs- und Faserrichtung der Deckschicht angeordnet. Durch diesen kreuzweisen Aufbau erhalten die Dielen eine erhöhte mechanische Stabilität und Dimensionsstabilität im Vergleich zu herkömmlichem Massivholzparkett, wodurch das Risiko von Rissbildung, Verwerfung oder Schrumpfung aufgrund von Feuchtigkeitsschwankungen und der Umgebung verringert wird.

Auf der anderen Seite der Mittellage ist eine Tragschicht angeordnet, die auch als Gegenzug bezeichnet werden kann. Es handelt sich hierbei typischerweise um eine dünne Furnierschicht aus Massivholz. Die Tragschicht stabilisiert die Schichtkonstruktion.

Ferner sind zweischichtige Parkettdielen bekannt, die nur eine Deckschicht und eine Trägerlage umfassen. Typischerweise ist die Trägerlage im Fall der zweischichtigen Parkettdielen ähnlich ausgebildet wie die Mittellage bei dreischichtigen Parkettdielen.

Die Stäbe, die zur Herstellung der Mittellage (bei 3-Schicht-Dielen) bzw. der Trägerlage (bei 2-Schicht-Dielen) verwendet werden, sind typischerweise aus Nadelholz gebildet und werden aus Brettern geschnitten. Allgemein können Mittellage und Trägerlage auch als Stabilisierungslage bezeichnet werden.

Im Stand der Technik ist bekannt, die Stäbe dieser Stabilisierungslage herzustellen, indem ein Brett in Längenrichtung abgelängt wird, um Abschnitte vorbestimmter Länge zu erhalten. Aus diesen Abschnitten werden in weiterer Folge durch längsgerichtete Schnitte entlang der Dickenrichtung der Bretter die Stäbe geschnitten. Die Dicke der so erhaltenen Stäbe beträgt in der Regel einige Millimeter, typischerweise zwischen 5 mm und 15 mm.

In der Praxis ergeben sich dadurch wesentliche Nachteile. Einerseits sind die Längen der Ausgangsbretter meist vorgegeben, sodass ein Verschnitt anfällt, der aufgrund ungeeigneter Länge von Brett-Resten nicht zur Herstellung von Stäben passender Länge verwendet werden kann. Andererseits sind in den Brettern oft Äste, Astlöcher oder andere Defekte enthalten, was dazu führt, dass Stäbe, die solche Defekte enthalten, auseinanderfallen oder für die Weiterverarbeitung nicht ausreichend stabil sind. Da derartige Stäbe ebenfalls nicht der gewünschten Verwendung zugeführt werden können, bilden diese ebenfalls Ausschuss.

Aufgrund der beschriebenen Probleme entsteht bei der Herstellung der Stäbe gemäß Stand der Technik eine große Menge an Ausschuss. Typischerweise beträgt der Materialausschuss um die 30% in Bezug auf die theoretisch (d.h. rechnerisch) erhältliche Menge an Stäben.

Im Stand der Technik sind zwar Verfahren bekannt, die diese Probleme teilweise lösen, jedoch erfordern diese Verfahren umfangreiche Bearbeitungsschritte wie Hobeln und Leimen, was den Arbeits- und Energieaufwand erhöht und durch den Materialabtrag hohe Abfallmengen verursacht.

Daraus ergibt sich ein Zielkonflikt, der gegebenenfalls im Rahmen der vorliegenden Erfindung gelöst werden kann. Insbesondere kann eine Aufgabe also darin gesehen werden, den Ausschuss bei der Herstellung der Stäbe zu reduzieren und den Bearbeitungs- und Energieaufwand gering zu halten.

Es wird daher ein Verfahren vorgeschlagen, bei dem Stäbe zur Verwendung in Parkettdielen gebildet werden.

In einem ersten Schritt dieses Verfahrens können Bretter bereitgestellt werden, die entlang ihrer Längserstreckungsrichtung zerschnitten, insbesondere zerteilt, werden.

Die Oberflächen der Bretter müssen nicht besonders bearbeitet werden. So können die Bretter, die in diesem Verfahren verwendet werden, insbesondere sägerau und/oder ungehobelt verarbeitet werden. Ferner können die Bretter in zumindest einer Richtung eine Krümmung aufweisen, beispielsweise eine Krümmung die sich durch den Verzug des Holzmaterials beim Trocknen ergeben hat.

Die angefertigten Schnitte erfolgen insbesondere im Wesentlichen parallel zur Breitenrichtung der Bretter, sodass zwei Brettteile erhalten werden, die dieselbe Länge und Breite wie das Ausgangsbrett, jedoch geringere Dicke aufweisen. Insbesondere erfolgen die Schnitte derart, dass die Dicke etwa der Hälfte der Dicke der Ausgangsbretter beträgt, abzüglich des Schnittverlusts durch den durchgeführten Längsschnitt.

Diese Längsschnitte können beispielsweise mit einer Bandsägevorrichtung durchgeführt werden. Vorteilhafterweise sind die erhaltenen Schnittflächen eben. Typischerweise erfolgt der Schnitt in horizontaler Richtung, sodass ein oberer Brettteil und ein unterer Brettteil gebildet werden.

In einem zweiten Schritt des Verfahrens können mehrere Brettteile dann in Längserstreckungsrichtung hintereinander angeordnet werden. Dabei ist vorteilhaft, wenn die Stirnflächen der Brettteile aneinanderstoßen, sodass ein kontinuierliches Band an Brettteilen, insbesondere an ersten oder unteren Brettteilen, gebildet wird. Insbesondere weist dieses Band dieselbe Breite auf wie die Bretter bzw. die Brettteile.

In weiterer Folge, also in einem dritten Schritt, können zweite Brettteile mit dem Band an ersten Brettteilen verklebt werden. Hierzu kann ein Schmelzklebstoff verwendet werden, der beispielsweise mit einer Auftragswalze auf die Schnittfläche der ersten Brettteile aufgetragen wird.

Die zweiten Brettteile können mit ihrer Schnittfläche auf die ersten Bretteile aufgelegt und zur Herstellung einer festen Klebeverbindung mit diesen verpresst werden. Dabei kann beispielsweise eine Presswalze eingesetzt werden. Das Auflegen der zweiten Brettteile erfolgt insbesondere in einer Weise, dass die zweiten Brettteile in Längsrichtung gegenüber den ersten Brettteilen versetzt sind bzw. einen Versatz aufweisen. Dies bedeutet, dass ein Brettteil den Stoßbereich von zwei anderen Brettteilen überbrückt. Mit anderen Worten kann ein Brettteil also mit Teilen der Schnittflächen benachbarter Brettteile verbunden bzw. verklebt werden. Vorteilhafterweise stoßen auch die Stirnflächen benachbarter zweiter Brettteile aneinander. Beim Verkleben werden insbesondere die Brettteile desselben Ausgangsbretts in einem Überlappungsabschnitt miteinander verklebt, wobei dies lediglich optional ist.

Der Auftrag des Klebstoffs kann flächig oder abschnittsweise erfolgen. Ein abschnittsweiser Auftrag kann beispielsweise punktförmig und/oder linienförmig erfolgen.

Die Menge des aufgetragenen Klebstoffs kann mehr als 60 g/m², insbesondere zwischen 80 g/m² und 200 g/m², bevorzugt zwischen 100 g/m² und 120 g/m², betragen. Dies bezieht sich auf die Größe der verklebten Fläche.

Der Versatz zwischen erstem und zweitem Brettteil beträgt insbesondere zumindest 50 mm.

Somit kann ein Endlosbrett gebildet werden, das aus mehreren ersten oder unteren Brettteilen und mehreren zweiten oder oberen Brettteilen gebildet ist. Das Endlosbrett weist insbesondere dieselbe Breite auf wie die Ausgangsbretter. Auch die Dicke des Endlosbretts entspricht im Wesentlichen der Dicke der Ausgangsbretter, sie kann sich aufgrund von Schnittverlust und/oder Verzug geringfügig von der Dicke der Ausgangsbretter unterscheiden. Die Länge des Endlosbretts wird durch die Anzahl der aneinandergereihten Brettteile bestimmt, es können jedoch auch neue Bretteile angefügt werden.

Das Endlosbrett weist insbesondere eine sägeraue und/oder ungehobelte Oberfläche auf.

Es ist jedoch auch möglich, dass kein Endlosbrett gebildet wird, sondern einzelne Brettstücke. Beispielsweise kann ein Brettstück dadurch gebildet werden, dass die beiden Brettteile in Längsrichtung einen Versatz aufweisen, jedoch nicht mit weiteren Brettteilen verbunden werden. Es ist auch möglich, dass einer der beiden Brettteile entlang der Schnittebene um 180° gedreht und so mit dem anderen Brettteil verbunden wird, ohne dass ein Versatz in Längenrichtung erfolgt.

In einem vierten Schritt kann das Endlosbrett auf die gewünschte Länge abgelängt werden, sodass Endlosbrett-Teile einer vordefinierten Länge gebildet werden. Die Endlosbrett-Teile weisen gegebenenfalls eine Länge auf, die der Breite der herzustellenden Parkettdielen, zuzüglich allfälligem Bearbeitungsverlust, entspricht.

Alternativ können die Endlosbrett-Teile gegebenenfalls auch eine Länge aufweisen, die einem ganzzahligen Vielfachen, beispielsweise dem Zwei-, Drei-, Vier- oder Fünffachen, der Breite der herzustellenden Parkettdielen, zuzüglich allfälligem Bearbeitungsverlust, entspricht. Der Bearbeitungsverlust kann durch weiteres Schneiden und/oder Fräsen entstehen, er beträgt jedoch typischerweise weniger als 10%, insbesondere weniger als 5%, der Breite der herzustellenden Parkettdielen. Zum Erhalten der Endlosbrett-Teile kann eine Kappsäge verwendet werden.

Insbesondere wird die Länge der Endlosbrett-Teile derart gewählt, dass in den weiteren Schritten eine verschnittfreie Verarbeitung erfolgen kann.

In einem fünften Schritt können die Endlosbrett-Teile in ihrer Längenrichtung zerschnitten werden. Die Schnitte verlaufen hier insbesondere parallel zur Dickenrichtung der Endlosbrett-Teile. Es werden insbesondere mehrere Schnitte in einem Endlosbrett-Teil angefertigt, wodurch die Stäbe gebildet werden.

Die so erhaltenen Stäbe weisen zwei Stabteile auf, die durch eine Klebeverbindung, nämlich insbesondere jene Klebeverbindung, durch die die zwei Bretteile zusammengehalten wurden, verbunden sind. Die Stäbe weisen insbesondere eine Breite auf, die der Dicke der Endlosbrett-Teile entspricht und eine Länge, die der Länge der Endlosbrett-Teile entspricht. Die Dicke der Stäbe wird durch den Abstand zwischen den einzelnen Schnitten bestimmt. Diese Schnitte werden gegebenenfalls mit einer Kreissäge, insbesondere mit einer Mehrblatt-Kreissäge erzeugt. Die Dicke der Stäbe beträgt gegebenenfalls zwischen 5 mm und 15 mm. Die Breite der Stäbe beträgt gegebenenfalls zwischen 4 mm und 40 mm. Die Länge der Stäbe beträgt gegebenenfalls zwischen 150 mm und 1500 mm.

Die hergestellten Stäbe können in weiterer Folge zur Herstellung einer Stabilisierungslage von Mehrschicht-Parkettdielen eingesetzt werden.

Gegebenenfalls lässt sich durch dieses Verfahren der Ausschuss verringern bzw. sogar komplett vermeiden, der in herkömmlichen Verfahren durch ungeeignete Länge von abgelängten Teilen der Ausgangsbretter entsteht. Die Endlosbretter können auf beliebige Länge zugeschnitten werden, ohne dass Reste anfallen. Gegebenenfalls lässt sich auch der Ausschuss reduzieren bzw. sogar komplett vermeiden, der durch fehlerhafte Stäbe entsteht. Durch das versetzte Aufeinanderkleben der Brettteile werden Stäbe, die Defekte enthalten, stabilisiert. Mit anderen Worten kann eine "Selbstheilung" von in den Ausgangsbrettern enthaltenen Defekten, beispielsweise von Holzfehlern, erreicht werden.

Insbesondere lässt sich durch das Verfahren der anfallende Ausschuss auf bis zu 10% des Materials reduzieren. Der Ausschuss wird in dem Verfahren hauptsächlich durch den Schnittverlust bestimmt.

Auch wenn in den Brettern keine Defekte enthalten sind, können durch Anwendung des Verfahrens vorteilhafte Eigenschaften erreicht werden, da die Stäbe bei Verwendung in Parkettdielen im Vergleich zu herkömmlichen Stäben eine erhöhte Klimabeständigkeit aufweisen, insbesondere wenn der verwendete Klebstoff eine gewisse Flexibilität aufweist.

Die erhaltenen Stäbe können in weiteren Schritten zu Parkettdielen verarbeitet werden, wobei dies gemäß im Stand der Technik bekannten Verfahren erfolgen kann.

Insbesondere können die Stäbe entlang der Längenrichtung der herzustellenden Diele verteilt, vorstabilisiert und dann mit Deck- und Tragschicht verklebt, insbesondere verleimt, werden. In einer solchen Parkettdiele ist insbesondere vorgesehen, dass die Faserrichtung der Holzfasern der Deckschicht und gegebenenfalls der Tragschicht im Wesentlichen parallel zur Längserstreckungsrichtung der Diele verläuft. Im Gegensatz dazu verläuft die Faserrichtung der Holzfasern der Stäbe insbesondere quer zur Längserstreckungsrichtung der Diele.

Die genannte Vorstabilisierung ist hingegen nicht zwingend erforderlich. Es kann auch ein direktes Verkleben der Stäbe mit einer weiteren Lage der Parkettdiele, beispielsweise mit der Oberseite einer Tragschicht und/oder mit der Unterseite einer Deckschicht, erfolgen.

In weiteren Verarbeitungsschritten kann vorgesehen sein, dass die Parkettdiele mit Profilfräsungen versehen wird und/oder die Deckschicht einer Oberflächenbehandlung unterzogen wird.

Ebenfalls beschrieben wird daher eine Parkettdiele, die eine Deckschicht und eine Stabilisierungslage aufweist. Gegebenenfalls weist die Parkettdiele auch eine zusätzliche Tragschicht auf. Die Deckschicht und die optionale Tragschicht sind insbesondere aus Massivholz gebildet und die Faserrichtung der Holzfasern verläuft parallel zur Längserstreckungsrichtung der Diele. Die Stäbe sind insbesondere auch aus Massivholz, vorzugsweise aus Nadelholz, gebildet und die Faserrichtung der Holzfasern verläuft winkelig, insbesondere quer, zur Längserstreckungsrichtung der Diele, also in Längserstreckungsrichtung der Stäbe.

"Winkelig" bedeutet insbesondere, dass die Stäbe bzw. deren Längserstreckungsrichtung in einem Winkel von 45° bis 90°, bevorzugt von 60° bis 90°, in Bezug auf die Längserstreckungsrichtung der Parkettdiele verläuft. "Winkelig" kann auch bedeuten, dass die Faserrichtung der Holzfasern der Stäbe in einem Winkel von 45° bis 90°, bevorzugt von 60° bis 90°, in Bezug auf die Faserrichtung der Holzfasern der Deckschicht verläuft.

Bevorzugt verlaufen alle Stäbe des Stabteppichs parallel zueinander, insbesondere parallel benachbart und nebeneinander.

Die Stäbe umfassen zwei Stabteile, die gegebenenfalls über eine Klebebrücke verbunden sind, wobei die Klebebrücke aus Schmelzkleber, insbesondere aus EVA-Schmelzkleber, gebildet sein kann. Die Klebebrücke ist insbesondere nicht vollständig mit Klebstoff gefüllt, sondern wird durch nebeneinanderliegende Stege oder Fasern des Klebstoffs gebildet.

Die Klebebrücke dient insbesondere nur als Hilfsverklebung und kann daher aus einem Thermoplastmaterial gebildet sein oder dieses umfassen.

Der Klebstoff kann ein schäumender Klebstoff sein.

Alternativ oder zusätzlich zu einem EVA-Schmelzkleber kann der Klebstoff auch ein Polyolefin-Material und/oder ein Polyurethan-Material umfassen oder daraus bestehen.

Benachbarte Stäbe sind insbesondere an ihren Stoßflächen nicht miteinander verbunden. Sie können also lose aneinanderstoßen oder es kann eine Lücke zwischen benachbarten Stäben gebildet sein.

Die Deck- und die optionale Tragschicht können mit der Anordnung der Stäbe, also mit dem Stabteppich, verleimt sein. Gegebenenfalls können die Deck- und die optionale Tragschicht mit der Anordnung der Stäbe, also mit dem Stabteppich, auch verklebt sein, insbesondere mittels eines Schmelzklebstoffs.

An den Stirnseiten der Parkettdielen können Stäbe aus Sperrholz vorgesehen sein, die insbesondere aus wasserfestem Sperrholz gebildet sind und eine Profilfräsung umfassen.

An der Stabilisierungslage kann eine Profilfräsung vorgesehen sein.

Die Stirnseiten der Parkettdielen können eine hydrophobe Imprägnierung aufweisen.

Die Dicke der Deckschicht kann zwischen 2 mm und 10 mm, insbesondere zwischen 2 mm und 5 mm, betragen. Die Dicke der Stabilisierungslage kann zwischen 5 mm und 15 mm betragen. Die Dicke der Tragschicht kann zwischen 1 mm und 5 mm betragen.

Die Parkettdielen können insbesondere 2-Schicht-Parkettdielen oder 3-Schicht-Parkettdielen sein.

Ferner ist eine Anlage zur Herstellung hier beschriebener Parkettdielen geoffenbart, die eine Stabbildungsstation zum Bilden der Stäbe, eine Schneidstation zum Bilden der Stäbe, eine Aufteilstation zum Bilden eines Stabteppichs aus den Stäben und eine Pressstation zum Verbinden, insbesondere Verleimen oder Verkleben, des Stabteppichs mit der Deckschicht und der optionalen Tragschicht umfasst.

Die Stabbildungsstation umfasst gegebenenfalls eine Transporteinrichtung zum Bereitstellen von Brettern, eine erste Schneidstation zum Anfertigen von Längsschnitten in den Brettern, eine Anordenstation zum in Längenrichtung aneinandergereihten Anordnen der Bretteile, eine Klebestation zum Verkleben der Bretteile, eine Ablängstation zum Ablängen des Endlosbretts und eine zweite Schneidstation zum Anfertigen von Längsschnitten in den Endlosbrett-Teilen.

Die erste Schneidstation kann eine Bandsäge umfassen. Die zweite Schneidstation kann eine Kreissäge, insbesondere eine Mehrblatt-Kreissäge, umfassen. Die Klebestation kann eine Auftragswalze zum Auftragen eines Klebstoffs umfassen. Ferner kann die Klebestation eine Presswalze zum Aneinanderpressen der Brettteile umfassen. Die Ablängstation kann eine Kappsäge umfassen. Alternativ oder zusätzlich zur Auftragswalze kann die Klebestation auch eine Sprühvorrichtung und/oder eine Streichvorrichtung zum Auftrag des Klebstoffs umfassen.

Weiters geoffenbart ist ein Verfahren zur Bildung eines Endlosbretts als solches, mit den hierin beschriebenen Schritten bis zum Ablängen des Endlosbretts. Dieses Verfahren kann somit als eigenständiger Aspekt angesehen werden, wobei alle Merkmale als geoffenbart gelten, die in Zusammenhang mit dem Herstellungsverfahren einer Parkettdiele, insbesondere bis zum Ablängen des Endlosbretts, beschrieben sind.

In Zusammenhang mit der vorliegenden Beschreibung haben die verwendeten Begriffe insbesondere die nachfolgend beschriebene Bedeutung:
Ein "Brett" bezeichnet insbesondere ein langgestrecktes Stück aus Holz, vorzugsweise Massivholz, das eine Länge, eine Breite und eine Dicke aufweist, wobei die Abmessungen in der Länge größer sind als in der Breite, und wobei die Dicke die kleinste Abmessung bildet. Die Fasern des Holzes sind insbesondere in Längenrichtung ausgerichtet. Typische Bretter weisen eine Dicke zwischen 8 mm und 40 mm und eine Breite von mehr als 80 mm auf (gemäß DIN 68252).

Die "Länge" eines Materials, eines Elements oder eines Gegenstands bezeichnet allgemein insbesondere dessen größte Abmessung in eine Richtung. Entsprechend bezeichnet die "Längenrichtung" oder die "Längserstreckungsrichtung" jene Richtung, in die die Länge ausgerichtet ist.

Insbesondere ist ein Verfahren zur Herstellung einer Parkettdiele vorgesehen, umfassend oder bestehend aus einer Deckschicht, sowie einer an der Deckschicht angeordneten Stabilisierungslage, wobei die Stabilisierungslage eine Vielzahl an winkelig, insbesondere quer, zur Längserstreckungsrichtung der Parkettdiele angeordneten Stäben umfasst.

Das Verfahren kann folgenden Schritt aufweisen:
- Bilden der Stäbe durch
   o Bereitstellen von Brettern aus Holz, insbesondere aus Massivholz,
   o Anfertigen von Längsschnitten in den Brettern, wobei die Längsschnitte entlang der Breitenrichtung der Bretter verlaufen, zum Bilden von zwei Brettteilen pro Brett, wobei jeder der Brettteile eine erste Schnittfläche aufweist,
   o in Längenrichtung aneinandergereihtes Anordnen der ersten Bretteile derart, dass jeweils zwei erste Brettteile mit ihren Stirnseiten aneinanderstoßen,
   o Verkleben der zweiten Bretteile mit den ersten Bretteilen mit zueinander weisenden ersten Schnittflächen, wobei die zweiten Brettteile entlang der Längenrichtung der ersten Brettteile versetzt angeordnet sind, und wobei die zweiten Brettteile insbesondere mit zwei ersten Brettteilen verklebt werden,
   o Ablängen des in Schritt iv erhaltenen Endlosbretts zum Bilden von Endlosbrett-Teilen, insbesondere zum Bilden von Endlosbrett-Teilen mit einer vorbestimmten Länge,
   o Anfertigen von Längsschnitten in den Endlosbrett-Teilen, wobei die Längsschnitte entlang der Dickenrichtung der Endlosbrett-Teile verlaufen, zum Bilden der Stäbe, wobei die Stäbe zweite Schnittflächen aufweisen,

Das Verfahren kann ferner einen oder beide der folgenden Schritte aufweisen:
- Anordnen der Stäbe zum Bilden eines Stabteppichs, wobei benachbarte Stäbe, insbesondere lose, aneinanderstoßen oder zueinander beabstandet sind, und wobei die zweiten Schnittflächen an der Oberseite und/oder an der Unterseite des Stabteppichs liegen,
- Verbinden, insbesondere Verleimen oder Verkleben, des Stabteppichs mit einer Deckschicht auf der Oberseite des Stabteppichs, sodass der Stabteppich an der Deckschicht angeordnet ist und die Stabilisierungslage der Parkettdiele bildet.

Gegebenenfalls ist vorgesehen, dass die Stäbe des Stabteppichs, insbesondere vor dem Schritt des Verbindens der Deckschicht mit der Stabilisierungslage, durch Aufbringen eines Bandes, insbesondere eines Klebebandes, auf die Oberseite oder die Unterseite des Stabteppichs miteinander verbunden werden.

Gegebenenfalls ist vorgesehen, dass die Stäbe des Stabteppichs direkt mit der Deckschicht verklebt werden, wobei das Verkleben insbesondere unter Verwendung eines Leims oder eines Schmelzklebstoffs erfolgt.

Gegebenenfalls ist vorgesehen, dass die Stäbe des Stabteppichs direkt mit einer Tragschicht verklebt werden, wobei das Verkleben insbesondere unter Verwendung eines Leims oder eines Schmelzklebstoffs erfolgt.

Gegebenenfalls ist vorgesehen, dass die Faserrichtung des Holzes der Bretter im Wesentlichen parallel zur Längenrichtung der Bretter verläuft.

Gegebenenfalls ist vorgesehen, dass die Bretter sägerau und/oder ungehobelt sind.

Gegebenenfalls ist vorgesehen, dass die Bretter sägerau und/oder ungehobelt zu den Stäben verarbeitet werden.

Gegebenenfalls ist vorgesehen, dass die Länge der Endlosbrett-Teile im Wesentlichen der Breite der zu bildenden Parkettdiele entspricht.

Gegebenenfalls ist vorgesehen, dass die Länge der Endlosbrett-Teile, gegebenenfalls unter Berücksichtigung des Schnittverlustes und Seitenfräsungen, einem ganzen Vielfachen der Breite der zu bildenden Parkettdiele entspricht.

Gegebenenfalls ist vorgesehen, dass die Parkettdiele durch Zuschneiden des nach dem Verbinden des Stabteppichs mit der Deckschicht erhaltenen Verbunds hergestellt wird.

Gegebenenfalls ist vorgesehen, dass der Stabteppich ferner an seiner Unterseite mit einer Tragschicht verbunden wird, sodass der Stabteppich zwischen der Deckschicht und der Tragschicht angeordnet ist und die Stabilisierungslage eine Mittellage der Parkettdiele bildet.

Insbesondere wird auch eine Parkettdiele beschrieben, umfassend oder bestehend aus einer Deckschicht sowie einer an der Deckschicht angeordneten Stabilisierungslage, wobei die Stabilisierungslage eine Vielzahl an winkelig, insbesondere quer, zur Längserstreckungsrichtung der Parkettdiele angeordneten Stäben umfasst, wobei die Stäbe aus Holz, insbesondere aus Massivholz, gebildet sind.

Gegebenenfalls ist vorgesehen, dass die Stäbe zwei in Längserstreckungsrichtung (5) der Parkettdiele nebeneinanderliegende und miteinander verklebte Stabteile umfassen, und dass benachbarte Stäbe, insbesondere lose, aneinanderstoßen oder zueinander beabstandet sind.

Gegebenenfalls ist vorgesehen, dass die Stabteile über eine Klebebrücke miteinander verbunden sind, wobei die Klebebrücke zwischen den beiden Stabteilen angeordnet ist, und dass die Klebebrücke insbesondere einen Schmelzklebstoff umfasst.

Gegebenenfalls ist vorgesehen, dass die Stoßflächen benachbarter Stäbe ungehobelt sind, und/oder dass die Holzfasern der Stäbe quer zur Längserstreckungsrichtung der Parkettdiele verlaufen.

Gegebenenfalls ist vorgesehen, dass ferner eine Tragschicht vorgesehen ist, wobei die Stabilisierungslage zwischen der Deckschicht und der Tragschicht angeordnet ist, sodass die die Stabilisierungslage eine Mittellage der Parkettdiele bildet.

Gegebenenfalls ist vorgesehen, dass die Deckschicht aus Holz, insbesondere aus Massivholz, gebildet ist, und/oder dass die optionale Tragschicht aus Holz, insbesondere aus Massivholz, gebildet ist.

Gegebenenfalls ist vorgesehen, dass die Stäbe eine Dicke von 5 mm bis 15 mm, insbesondere von 6 mm bis 12 mm aufweisen, und/oder dass die Stäbe eine Breite von 10 mm bis 50 mm, insbesondere von 15 mm bis 40 mm aufweisen.

Insbesondere wird auch eine Anlage zur Herstellung einer Parkettdiele beschrieben, wobei die Parkettdiele aus einer Deckschicht, sowie einer an der Deckschicht angeordneten Stabilisierungslage besteht oder diese umfasst, wobei die Stabilisierungslage eine Vielzahl an winkelig, insbesondere quer, zur Längserstreckungsrichtung der Parkettdiele angeordneten Stäben umfasst.

Die Anlage ist insbesondere dazu eingerichtet, ein hierin beschriebenes Verfahren auszuführen.

Gegebenenfalls umfasst die Anlage:
- eine Stabbildungsstation zum Bilden der Stäbe mit
   o einer Transporteinrichtung zum Bereitstellen von Brettern aus Holz,
   o einer ersten Schneidstation zum Anfertigen von Längsschnitten in den Brettern, wobei die Längsschnitte entlang der Breitenrichtung der Bretter verlaufen, zum Bilden von zwei Brettteilen pro Brett, wobei jeder der Brettteile eine erste Schnittfläche aufweist,
   o einer Anordenstation zum in Längenrichtung aneinandergereihten Anordnen der ersten Bretteile derart, dass jeweils zwei erste Brettteile mit ihren Stirnseiten aneinanderstoßen,
   o einer Klebestation zum Verkleben der zweiten Bretteile mit den ersten Bretteilen mit zueinander weisenden ersten Schnittflächen, wobei die zweiten Brettteile entlang der Längenrichtung der ersten Brettteile versetzt angeordnet sind, und wobei die zweiten Brettteile insbesondere mit zwei ersten Brettteilen verklebt werden, sodass ein Endlosbrett gebildet wird,
   o einer Ablängstation zum Ablängen des Endlosbretts zum Bilden von Endlosbrett-Teilen, insbesondere zum Bilden von Endlosbrett-Teilen mit einer vorbestimmten Länge,
   o einer zweiten Schneidstation zum Anfertigen von Längsschnitten in den Endlosbrett-Teilen, wobei die Längsschnitte entlang der Dickenrichtung der Endlosbrett-Teile verlaufen, zum Bilden der Stäbe, wobei die Stäbe zweite Schnittflächen aufweisen.

Gegebenenfalls umfasst die Anlage:
- eine Aufteilstation zum Anordnen der Stäbe zum Bilden eines Stabteppichs, wobei benachbarte Stäbe, insbesondere lose, aneinanderstoßen oder zueinander beabstandet sind, und wobei die zweiten Schnittflächen an der Oberseite und/oder an der Unterseite des Stabteppichs liegen, und/oder
- eine Pressstation zum Verbinden, insbesondere Verleimen oder Verkleben, des Stabteppichs mit einer Deckschicht auf der Oberseite des Stabteppichs, sodass der Stabteppich an der Deckschicht angeordnet ist und die Stabilisierungslage der Parkettdiele bildet.

Gegebenenfalls ist vorgesehen, dass die Presstation ferner zum Verbinden, insbesondere Verleimen oder Verkleben, des Stabteppichs mit einer Tragschicht auf der Unterseite des Stabteppichs eingerichtet ist.

Gegebenenfalls ist vorgesehen, dass die Pressstation eine Flachpresse und/oder eine Walzenpresse umfasst.

Es wird auch ein Verfahren zur Herstellung eines Endlosbretts beschrieben. Dieses Verfahren umfasst gegebenenfalls folgende Schritte:
- Bereitstellen von Brettern aus Holz, insbesondere aus Massivholz,
- Anfertigen von Längsschnitten in den Brettern, wobei die Längsschnitte entlang der Breitenrichtung der Bretter verlaufen, zum Bilden von zwei Brettteilen pro Brett, wobei jeder der Brettteile eine erste Schnittfläche aufweist,
- in Längenrichtung aneinandergereihtes Anordnen der ersten Bretteile derart, dass jeweils zwei erste Brettteile mit ihren Stirnseiten aneinanderstoßen,
- Verkleben der zweiten Bretteile mit den ersten Bretteilen mit zueinander weisenden ersten Schnittflächen, wobei die zweiten Brettteile entlang der Längenrichtung der ersten Brettteile versetzt angeordnet sind, und wobei die zweiten Brettteile insbesondere mit zwei ersten Brettteilen verklebt werden.

Gegebenenfalls ist vorgesehen, dass die Faserrichtung des Holzes der Bretter im Wesentlichen parallel zur Längenrichtung der Bretter verläuft.

Gegebenenfalls ist vorgesehen, dass die Breite des Endlosbretts im Wesentlichen der Breite der Bretter entspricht.

Gegebenenfalls ist vorgesehen, dass zum Verkleben der Brettteile ein Schmelzkleber verwendet wird.

Gegebenenfalls ist vorgesehen, dass das zum Verkleben der Brettteile verwendete Klebemittel auf die erste Schnittfläche aufgebracht wird, und dass die ersten und zweiten Brettteile nach dem Aufbringen des Klebemittels, insbesondere mit einer Walzenpresse, verpresst werden.

Gegebenenfalls ist vorgesehen, dass in dem Endlosbrett ein erster Brettteil mit einem zweiten Brettteil verklebt ist, wobei die Brettteile aus demselben Brett stammen.

Die Merkmale des Verfahrens zur Herstellung eines Endlosbretts sind auf das hier beschriebene Verfahren zur Herstellung einer Parkettdiele anwendbar. Ebenso können Merkmale des so hergestellten Endlosbretts Merkmale der Parkettdiele bilden. Jedoch ist zu beachten, dass das Verfahren zur Herstellung eines Endlosbretts einen separaten Aspekt der vorliegenden Beschreibung bildet, der nicht notwendigerweise in Zusammenhang mit dem Verfahren zur Herstellung einer Parkettdiele anzusehen ist.

Weitere Merkmale ergeben sich aus den Patentansprüchen, den Figuren sowie der Beschreibung der Ausführungsbeispiele.

Nachfolgend werden die zuvor allgemein beschriebenen Gegenstände anhand eines exemplarischen Ausführungsbeispiels im Detail erläutert. Dieses Ausführungsbeispiel dient lediglich der Illustration und soll den Schutzumfang der Patentansprüche nicht einschränken.

In den Figuren zeigen:
Fig. 1 eine schematische Ansicht der Herstellung von Brettteilen aus Brettern;
Fig. 2 eine schematische Ansicht des Verklebens von Brettteilen und eines dadurch gebildeten Endlosbretts;
Fig. 3 eine schematische Ansicht eines durch das Ablängen des Endlosbretts gebildeten Endlosbrett-Teils;
Fig. 4 eine schematische Ansicht eines aus dem Endlosbrett-Teil gebildeten Stabes;
Fig. 5 eine schematische Ansicht eines Stabteppichs;
Fig. 6 eine schematische seitliche Schnittansicht einer Parkettdiele;
Fig. 7 eine schematische Ansicht eines Stabes gemäß Stand der Technik; und
Fig. 8 eine schematische Ansicht eines Stabes, der nach einem hier beschriebenen Verfahren hergestellt wurde.

Sofern nicht anders verwendet, zeigen die Figuren: Parkettdiele 1; Deckschicht 2; Stabilisierungslage 3; Tragschicht 4; Längserstreckungsrichtung 5 (der Parkettdiele 1); Stab 6; Stabteil 7; Klebebrücke 8; Brett 9; Breitenrichtung 10 (des Bretts 9); erster Brettteil 11a; zweiter Brettteil 11b; erste Schnittfläche 12; Stirnseite 13 (eines Brettteils 11a, 11b); Längenrichtung 14 (des Bretts 9); Endlosbrett 15; Endlosbrett-Teil 16; Dickenrichtung 17 (des Bretts 9); Stabteppich 18; Faserrichtung 19; Band 20; zweite Schnittfläche 21; Oberseite 22 (des Stabteppichs 18); Unterseite 23 (des Stabteppichs 18); Transportband 24; Stoßfläche 25 (benachbarter Stäbe 6); erste Schneidstation 26; Auftragswalze 27; Presswalze 28; Versatz 29; Schnittlinie 30; Astloch 31; Holzfaser 32, Schmelzkleber 33; Lücke 34.

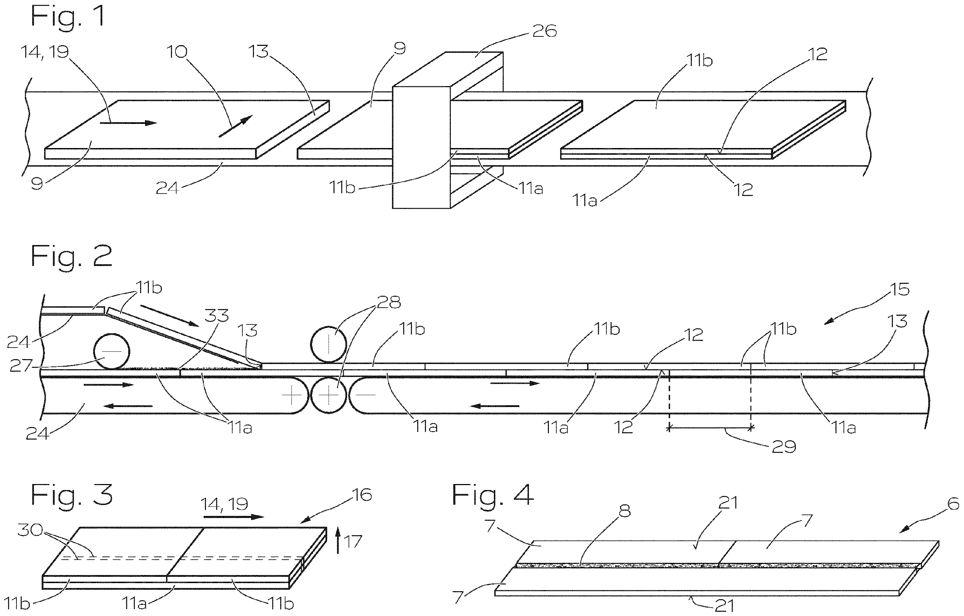

Fig. 1 zeigt eine schematische Ansicht der Herstellung von Brettteilen 11a, 11b aus Brettern 9. Die Bretter 9 weisen eine Stirnseite 13, eine Breitenrichtung 10 sowie eine Längenrichtung 14 auf. Die Bretter 9 sind aus Massivholz, in diesem Beispiel aus Fichtenholz, gebildet und die Faserrichtung 19 verläuft in Längenrichtung 14. Die Bretter 9 sind in sägerauem Zustand und ungehobelt. Dies bedeutet, dass sie eine unebene Oberfläche, gegebenenfalls mit einer gewissen Krümmung, aufweisen.

Die Dicke der Bretter beträgt in diesem Ausführungsbeispiel etwa 30 mm, ihre Breite etwa 150 mm und ihre Länge etwa 4000 mm.

Die Bereitstellung der Bretter 9 erfolgt mittels eines Transportbandes 24. Das Transportband 24 fördert die Bretter 9 in eine erste Schneidstation 26, die mit einer Bandsäge ausgestattet ist. Das Sägeblatt der Bandsäge weist eine Dicke von etwa 1,5 mm auf. In der ersten Schneidstation 26 werden die Bretter 9 durch Längsschnitte, die entlang der Breitenrichtung 10 der Bretter 9 verlaufen in zwei Brettteile 11a, 11b zerteilt. Die beiden Brettteile 11a, 11b weisen im Wesentlichen dieselbe Dicke auf, es handelt sich also um zwei Hälften des Bretts 9. Nach Verlassen der ersten Schneidstation 26 weisen die erzeugten ersten Schnittflächen 12 zueinander. Die ersten Schnittflächen 12 sind eben.

Fig. 2 zeigt eine schematische Ansicht des Verklebens von Brettteilen 11a, 11b und eines dadurch gebildeten Endlosbretts 15. Nach der Herstellung der Bretteile 11a, 11b, wie in Fig. 1 illustriert, werden diese auf separate Transportbänder 24 aufgeteilt. Dadurch liegt die erste Schnittfläche 12 der ersten Brettteile 11a (hier: der unteren Brettteile) frei. Die ersten Brettteile 11a sind in Längenrichtung 14 nacheinander angeordnet und ihre Stirnseiten 13 stoßen aneinander.

Die Schnittfläche 12 wird mittels einer Auftragswalze 27 mit einem EVA-Schmelzkleber 33 versehen. Dabei erfolgt im Wesentlichen ein vollflächiger Auftrag des Schmelzklebers 33 über die gesamte erste Schnittfläche 12.

Von einem weiteren Transportband 24 werden die zweiten Brettteile 11b (hier: die oberen Brettteile) bereitgestellt, deren erste Schnittflächen 12 nach unten weisen. Das Transportband 24 fördert die zweiten Brettteile 11b in Richtung der ersten Brettteile 11a und ordnet diese mit zueinander weisenden Schnittflächen 12 aneinander an. Auch die Stirnseiten 13 der zweiten Brettteile 11b stoßen aneinander. Die Anordnung der ersten Brettteile 11a gegenüber den zweiten Brettteilen 11b erfolgt derart, dass deren Enden gegeneinander versetzt sind und dadurch einen Versatz 29 aufweisen.

Nachdem die zweiten Brettteile 11b auf die ersten Brettteile 11a aufgelegt wurden, werden diese mit zwei Presswalzen 28 verpresst, um eine Klebeverbindung zwischen den Brettteilen 11a, 11b bzw. genauer gesagt zwischen den beiden ersten Schnittflächen 12 herzustellen. Durch eine Krümmung der Brettteile 11a, 11b kann vorkommen, dass nach dem Verpressen ein Spalt zwischen den beiden ersten Schnittflächen 12 entsteht. Dies ist jedoch für die beabsichtigte Anwendung unproblematisch und durch die Verwendung eines Schmelzklebers kann trotzdem eine ausreichende Klebebrücke erhalten werden.

Dadurch wird ein Endlosbrett 15 gebildet, das in seiner Breite und Dicke etwa den Maßen der Bretter 9 entspricht, die zu seiner Herstellung verwendet wurden. In diesem Endlosbrett 15 überbrücken die zweiten Brettteile 11b jenen Bereich, in dem zwei erste Brettteile 11a aneinanderstoßen und die ersten Brettteile 11a überbrücken jenen Bereich, in dem zwei zweite Brettteile 11b aneinanderstoßen, sodass es theoretisch möglich ist, ein kontinuierliches Endlosbrett 15 beliebiger Länge zu bilden.

Fig. 3 zeigt eine schematische Ansicht eines durch das Ablängen des Endlosbretts 15 gebildeten Endlosbrett-Teils 16. Dies erfolgt im hier beschriebenen Ausführungsbeispiel mit einer Kappsäge. Die Länge der Endlosbrett-Teile 16 ist frei wählbar, jedoch ist es vorteilhaft, wenn diese mit der gewünschten Länge der Stäbe 6 korreliert oder in Vielfaches dieser Länge beträgt, wobei Schnitt- und andere Bearbeitungsverluste zu berücksichtigen sind. In diesem Ausführungsbeispiel beträgt die Länge der Endlosbrett-Teile 16 etwa 420 mm.

Die Endlosbrett-Teile 16 werden in weiterer Folge mit einer Mehrblatt-Kreissäge in einzelne Stäbe 6 zerteilt. Die Schnitte erfolgen entlang von Schnittlinien 30, die entlang der Dickenrichtung 17 des Bretts 9 bzw. der Endlosbrett-Abschnitte 16 und in Längenrichtung 14 derselben verlaufen.

Fig. 4 zeigt eine schematische Ansicht eines so erhaltenen Stabes 6. Der Stab 6 umfasst zwei Stabteile 7, die jeweils aus dem ersten Brettteil 11a und aus dem zweiten Brettteil 11b stammen. Die beiden Stabteile 7 sind über eine Klebebrücke 8 miteinander verbunden. Es handelt sich dabei um jenen Schmelzkleber 33, der zur Verklebung der Brettteile 11a, 11b verwendet wurde.

Durch die Schnitte entlang der Schnittlinie 30 im Endlosbrett-Teil 16 weist der Stab 6 an Ober- und Unterseite jeweils eine zweite Schnittfläche 21 auf. Die Länge des Stabes 6 entspricht der Länge des Endlosbrett-Teils 16. Die Dicke des Stabs 6 entspricht dem Abstand der Schnittlinien 30 zueinander, abzüglich des Schnittverlusts. Die Breite des Stabs entspricht der Dicke des Endlosbrett-Teils 16.

In diesem Ausführungsbeispiel beträgt die Dicke der Stäbe etwa 9 mm und ihre Länge - entsprechend der Länge der Endlosbrett-Teile 16 - beträgt etwa 420 mm. Die Breite der Stäbe 6 beträgt etwa 30 mm - entsprechend der Dicke der Bretter 9.

In Fig. 4 ist ferner erkennbar, dass ein Stabteil 7 aus zwei Einzelteilen gebildet ist. Dies ergibt sich durch das Vorhandensein von zwei zweiten Brettteilen 11b in dem Endlosbrett-Teil 16, der in Fig. 3 gezeigt ist und aus dem der Stab 6 in Fig. 4 stammt.

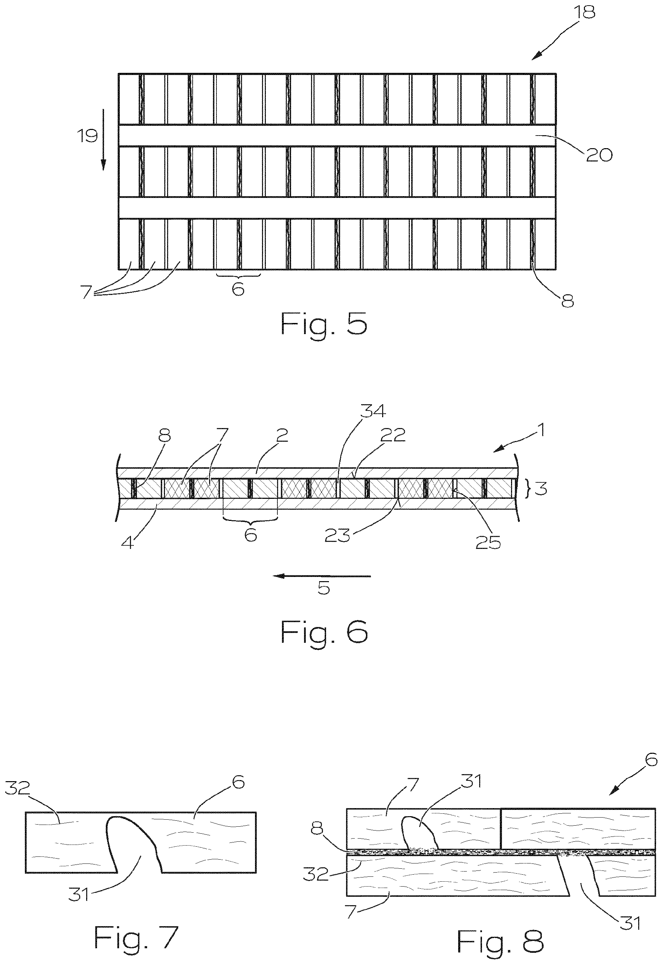

Sofern erforderlich werden die Stäbe 6 dann auf die gewünschte Länge abgelängt und es wird durch Aneinanderreihung mehrerer Stäbe 6 nebeneinander ein Stabteppich 18 gebildet, wie in Fig. 5 gezeigt. Dies erfolgt derart, dass die Längenrichtung der Stäbe 6, die auch der Faserrichtung 19 entspricht, quer zur Längenrichtung des Stabteppichs 18 verläuft. Die Stäbe 6 weisen also in Breitenrichtung des Stabteppichs 18.

Die zueinander weisenden Flächen benachbarter Stäbe 6 können als Stoßflächen 25 bezeichnet werden. Die Stoßflächen 25 können im Stabteppich 18 zueinander beabstandet sein oder lose aneinanderstoßen. Benachbarte Stäbe 6 sind an ihren Stoßflächen 25 jedoch nicht miteinander verklebt oder anderweitig fest verbunden.

Die Länge der Stäbe 6, also auch die Breite des Stabteppichs 18, beträgt hier etwa 210 mm. Die Stäbe 6 können durch Halbieren der in Fig. 4 dargestellten Stäbe erhalten werden. Die Länge des Stabteppichs 18 beträgt etwa 1200 mm.

Eine provisorische Verbindung zwischen den Stäben 6 zur Stabilisierung des Stabteppichs 18 wird durch Aufbringen von klebenden Bändern 20 auf eine Seite des Stabteppichs 18 erreicht.

Der so gebildete Stabteppich 18 wird in weiterer Folge an seiner Oberseite 22 mit einer Deckschicht 2 aus Massivholz und an seiner Unterseite 23 mit einer Tragschicht 4 aus Massivholz verleimt, um eine Parkettdiele 1 zu bilden. Der Stabteppich 18 bzw. die Anordnung an Stäben 6 bildet so die Stabilisierungslage 3, also im Fall dieses Ausführungsbeispiels die Mittellage, der Parkettdiele 1. Eine schematische Detailansicht einer solchen Parkettdiele 1 gemäß einem Ausführungsbeispiel ist in Fig. 6 gezeigt. Es handelt sich um eine Schnittansicht in Dickenrichtung der Diele 1. Zur besseren Erkennbarkeit sind Stabteile 7 benachbarter Stäbe 6 mit unterschiedlichen Mustern schraffiert.

Die Deckschicht 2 ist in diesem Ausführungsbeispiel aus etwa 3,6 mm dickem Eichenholz gebildet. Die Tragschicht 4 ist in diesem Ausführungsbeispiel aus etwa 2 mm dickem Fichtenfurnier gebildet. Die Holzfasern von Deckschicht 2 und Tragschicht 4 verlaufen in Richtung der Längserstreckungsrichtung 5 der Parkettdiele 1. Die Stäbe 6 und deren Faserrichtung verlaufen hingegen quer zur Längserstreckungsrichtung 5 der Diele 1.

Zwischen den Stoßflächen 25 benachbarter Stäbe 6 sind Lücken 34 vorgesehen, die Stoßflächen 25 berühren einander hier also nicht.

An den Stirnseiten der Parkettdiele 1 sind in bekannter Weise Sperrholzeinleimer vorgesehen. Die Breit- und Längskanten der Diele weisen eine Profilfräsung auf, die zur formschlüssigen Verbindung mit benachbarten Dielen 1 verwendet werden können (nicht gezeigt).

Zur weiteren Illustration der vorteilhaften Effekte dienen die Fig. 7 und 8. Fig. 7 zeigt eine schematische Ansicht eines Stabes 6 gemäß Stand der Technik, während Fig. 8 eine schematische Ansicht eines Stabes 6 zeigt, der nach einem hier beschriebenen Verfahren hergestellt wurde.

Bei der Herstellung beider Stäbe 6 wurde ein Bereich eines Bretts verwendet, in dem ein Astloch 31 angeordnet war.

In Fig. 7 ist zu sehen, dass das Astloch 31 den Stab 6 fast vollständig durchsetzt, sodass dieser keine ausreichende mechanische Stabilität aufweist, um einen Stabteppich bilden zu können. Bei der weiteren Verarbeitung würde der Stab 6 in zwei Teile auseinanderbrechen.

Fig. 8 illustriert einen Stab 6, bei dessen Herstellung ebenfalls ein Brett mit einem Astloch 31 verwendet wurde, wobei das Astloch 31 das Brett ebenfalls fast vollständig durchsetzt hat. Hier erfolgte die Herstellung jedoch nach einem wie hier beschriebenen Verfahren aus einem Endlosbrett 15. Das Astloch 31 wurde daduch auf zwei Brettteile verteilt und durch den Versatz bildet es keinen durchgehenden Defekt im Stab 6. Der jeweils gegenüberliegende Stabteil 7 ist aus durchgehendem Holzmaterial gebildet und stabilisiert so den Stab 6. Dieser weist ausreichende Stabilität auf, um zur Bildung eines Stabteppichs verwendet werden zu können.

In einem zweiten Ausführungsbeispiel kann die Parkettdiele 1 eine 2-Schicht-Diele sein, wobei die Stäbe 6 eine Trägerlage der Parkettdiele 1 bilden.

Im zweiten Ausführungsbeispiel wird der Stabteppich 18 direkt mit der Deckschicht 2 verleimt, sodass die temporäre Stabilisierung des Stabteppichs 18 durch Aufbringung der Bänder 20 entfallen kann. Es kann somit direkt im Verfahren (d.h. online) eine Verbindung zwischen Deckschicht 2 und Stabilisierungslage 3 hergestellt werden.

Grundsätzlich ist auch denkbar, dass dieses Verfahren gemäß dem zweiten Ausführungsbeispiel zur Herstellung von 3-Schicht-Dielen verwendet wird, wobei zusätzlich zum Verleimen von Deckschicht 2 und Stabilisierungslage 3 auch ein Verleimen von Stabilisierungslage 3 und Tragschicht 4 erfolgt, ohne dass die Stabilisierung des Stabteppichs 18 durch Bänder 20 erforderlich ist.

In einem dritten Ausführungsbeispiel kann der Stabteppich 18 an der Oberseite 22 mit einer Deckschicht 2 und an der Unterseite 23 mit einer Tragschicht 4 unter Verwendung eines Schmelzklebstoffs verklebt werden, ohne dass eine Stabilisierung des Stabteppichs 18 durch Bänder 20 erfolgt. In einer speziellen Ausgestaltung dieses Ausführungsbeispiel kann in einem ersten Teilschritt zuerst ein Verbund aus Stabteppich 18 und Tragschicht 4 gebildet werden (sogenanntes Unterlagen-Sandwich), wonach in einem zweiten Teilschritt das Unterlagen-Sandwich mit der Deckschicht 2 verklebt wird.

Das Verfahren gemäß dem dritten Ausführungsbeispiel erlaubt eine besonders zeiteffiziente Herstellung der Parkettdielen 1, da die Anordnung aus Deckschicht 2, Stabteppich 18 und Tragschicht 4 einen vergleichsweise kurzen Pressvorgang unterzogen werden muss, um eine ausreichende Verbindung der Lagen zu ermöglichen. Beispielsweise kann besagte Anordnung über Presswalzen (Kalanderverpressung) geführt werden, sodass das Pressen kontinuierlich erfolgen kann.

Im Vergleich dazu sind beim Verleimen der Schichten in der Regel Flachpressen erforderlich, die eine länger andauernde Presskraft auf die Anordnung ausüben müssen, um eine ausreichende Verbindung der Lagen zu ermöglichen.

Aus dem hergestellten Verbund können durch Zersägen des Verbunds einzelne Parkettdielen 1 erhalten werden.

## Patentansprüche

1. **Verfahren** zur Herstellung einer Parkettdiele (1), umfassend oder bestehend aus einer Deckschicht (2), sowie einer an der Deckschicht (2) angeordneten Stabilisierungslage (3), wobei die Stabilisierungslage (3) eine Vielzahl an winkelig, insbesondere quer, zur Längserstreckungsrichtung (5) der Parkettdiele (1) angeordneten Stäben (6) umfasst, wobei das Verfahren folgende Schritte aufweist:
a. Bilden der Stäbe (6) durch
i. Bereitstellen von Brettern (9) aus Holz, insbesondere aus Massivholz,
ii. Anfertigen von Längsschnitten in den Brettern (9), wobei die Längsschnitte entlang der Breitenrichtung (10) der Bretter (9) verlaufen, zum Bilden von zwei Brettteilen (11a, 11b) pro Brett (9), wobei jeder der Brettteile (11a, 11b) eine erste Schnittfläche (12) aufweist,
iii. in Längenrichtung (14) aneinandergereihtes Anordnen der ersten Bretteile (11a) derart, dass jeweils zwei erste Brettteile (11a) mit ihren Stirnseiten (13) aneinanderstoßen,
iv. Verkleben der zweiten Bretteile (11b) mit den ersten Bretteilen (11a) mit zueinander weisenden ersten Schnittflächen (12), wobei die zweiten Brettteile (11b) entlang der Längenrichtung (14) der ersten Brettteile (11a) versetzt angeordnet sind, und wobei die zweiten Brettteile (11b) insbesondere mit zwei ersten Brettteilen (11a) verklebt werden,
v. Ablängen des in Schritt iv erhaltenen Endlosbretts (15) zum Bilden von Endlosbrett-Teilen (16), insbesondere zum Bilden von Endlosbrett-Teilen (16) mit einer vorbestimmten Länge,
vi. Anfertigen von Längsschnitten in den Endlosbrett-Teilen (16), wobei die Längsschnitte entlang der Dickenrichtung (17) der Endlosbrett-Teile (16) verlaufen, zum Bilden der Stäbe (6), wobei die Stäbe (6) zweite Schnittflächen (21) aufweisen,
b. Anordnen der Stäbe (6) zum Bilden eines Stabteppichs (18), wobei benachbarte Stäbe (6), insbesondere lose, aneinanderstoßen oder zueinander beabstandet sind, und wobei die zweiten Schnittflächen (21) an der Oberseite (22) und/oder an der Unterseite (23) des Stabteppichs (18) liegen,
c. Verbinden, insbesondere Verleimen oder Verkleben, des Stabteppichs (18) mit einer Deckschicht (2) auf der Oberseite (22) des Stabteppichs (18), sodass der Stabteppich (18) an der Deckschicht (2) angeordnet ist und die Stabilisierungslage (3) der Parkettdiele (1) bildet.

2. Verfahren nach Anspruch 1, **dadurch gekennzeichnet,**
- **dass** die Stäbe (6) des Stabteppichs (18), insbesondere vor Schritt (c), durch Aufbringen eines Bandes (20), insbesondere eines Klebebandes, auf die Oberseite (22) oder die Unterseite (23) des Stabteppichs (18) miteinander verbunden werden, oder
- **dass** die Stäbe (6) des Stabteppichs (18) direkt mit der Deckschicht (2) verklebt werden, wobei das Verkleben insbesondere unter Verwendung eines Leims oder eines Schmelzklebstoffs erfolgt, oder
- **dass** die Stäbe (6) des Stabteppichs (18) direkt mit einer Tragschicht (4) verklebt werden, wobei das Verkleben insbesondere unter Verwendung eines Leims oder eines Schmelzklebstoffs erfolgt.

3. Verfahren nach Anspruch 1 oder 2, **dadurch gekennzeichnet,**
- **dass** die Faserrichtung (19) des Holzes der Bretter (9) im Wesentlichen parallel zur Längenrichtung (14) der Bretter (9) verläuft,
- und/oder dass die Bretter (9) ungehobelt sind,
- und/oder dass die Bretter (9) ungehobelt zu den Stäben (6) verarbeitet werden.

4. Verfahren nach einem der Ansprüche 1 bis 3, **dadurch gekennzeichnet, dass** die Länge der Endlosbrett-Teile (16) im Wesentlichen der Breite der zu bildenden Parkettdiele (1) entspricht, oder dass die Länge der Endlosbrett-Teile (16), gegebenenfalls unter Berücksichtigung des Schnittverlustes und Seitenfräsungen, einem ganzen Vielfachen der Breite der zu bildenden Parkettdiele (1) entspricht.

5. Verfahren nach einem der Ansprüche 1 bis 4, **dadurch gekennzeichnet, dass** die Parkettdiele (1) durch Zuschneiden des nach dem Verbinden des Stabteppichs (18) mit der Deckschicht (2) erhaltenen Verbunds hergestellt wird.

6. Verfahren nach einem der Ansprüche 1 bis 5, **dadurch gekennzeichnet, dass** der Stabteppich (18) in Schritt (c) ferner an seiner Unterseite (23) mit einer Tragschicht (4) verbunden wird, sodass der Stabteppich (18) zwischen der Deckschicht (2) und der Tragschicht (4) angeordnet ist und die Stabilisierungslage (3) eine Mittellage der Parkettdiele (1) bildet.

7. **Parkettdiele** umfassend oder bestehend aus einer Deckschicht (2) sowie einer an der Deckschicht (2) angeordneten Stabilisierungslage (3), wobei die Stabilisierungslage (3) eine Vielzahl an winkelig, insbesondere quer, zur Längserstreckungsrichtung (5) der Parkettdiele (1) angeordneten Stäben (6) umfasst, wobei die Stäbe (6) aus Holz, insbesondere aus Massivholz, gebildet sind, **dadurch gekennzeichnet, dass** die Stäbe (6) zwei in Längserstreckungsrichtung (5) der Parkettdiele (1) nebeneinanderliegende und miteinander verklebte Stabteile (7) umfassen, und dass benachbarte Stäbe (6), insbesondere lose, aneinanderstoßen oder zueinander beabstandet sind.

8. Parkettdiele nach Anspruch 7, **dadurch gekennzeichnet, dass** die Stabteile (7) über eine Klebebrücke (8) miteinander verbunden sind, wobei die Klebebrücke (8) zwischen den beiden Stabteilen (7) angeordnet ist, und dass die Klebebrücke (8) insbesondere einen Schmelzklebstoff umfasst.

9. Parkettdiele nach einem der Ansprüche 7 oder 8, **dadurch gekennzeichnet, dass** die Stoßflächen (25) benachbarter Stäbe (6) ungehobelt sind, und/oder dass die Holzfasern der Stäbe (6) quer zur Längserstreckungsrichtung (5) der Parkettdiele (1) verlaufen.

10. Parkettdiele nach einem der Ansprüche 7 bis 9, **dadurch gekennzeichnet, dass** ferner eine Tragschicht (4) vorgesehen ist, wobei die Stabilisierungslage (3) zwischen der Deckschicht (2) und der Tragschicht (4) angeordnet ist, sodass die die Stabilisierungslage (3) eine Mittellage der Parkettdiele (1) bildet.

11. Parkettdiele nach einem der Ansprüche 7 bis 10, **dadurch gekennzeichnet, dass** die Deckschicht (2) aus Holz, insbesondere aus Massivholz, gebildet ist, und/oder dass die optionale Tragschicht (4) aus Holz, insbesondere aus Massivholz, gebildet ist.

12. Parkettdiele nach einem der Ansprüche 7 bis 11, **dadurch gekennzeichnet, dass** die Stäbe (6) eine Dicke von 4 mm bis 15 mm, insbesondere von 6 mm bis 12 mm aufweisen, und/oder dass die Stäbe (6) eine Breite von 10 mm bis 50 mm, insbesondere von 15 mm bis 40 mm aufweisen.

13. **Anlage** zur Herstellung einer Pakettdiele (1), umfassend oder bestehend aus einer Deckschicht (2) sowie an der Deckschicht (2) angeordneten Stabilisierungslage (3), wobei die Stabilisierungslage (3) eine Vielzahl an winkelig, insbesondere quer, zur Längserstreckungsrichtung (5) der Parkettdiele (1) angeordneten Stäben (6) umfasst, insbesondere mit einem Verfahren nach einem der Ansprüche 1 bis 6, wobei die Anlage umfasst:
a. eine Stabbildungsstation zum Bilden der Stäbe (6) mit
i. einer Transporteinrichtung zum Bereitstellen von Brettern (9) aus Holz,
ii. einer ersten Schneidstation (26) zum Anfertigen von Längsschnitten in den Brettern (9), wobei die Längsschnitte entlang der Breitenrichtung (10) der Bretter (9) verlaufen, zum Bilden von zwei Brettteilen (11a, 11b) pro Brett (9), wobei jeder der Brettteile (11a, 11b) eine erste Schnittfläche (12) aufweist,
iii. einer Anordenstation zum in Längenrichtung (14) aneinandergereihten Anordnen der ersten Bretteile (11a) derart, dass jeweils zwei erste Brettteile (11a) mit ihren Stirnseiten (13) aneinanderstoßen,
iv. einer Klebestation zum Verkleben der zweiten Bretteile (11b) mit den ersten Bretteilen (11a) mit zueinander weisenden ersten Schnittflächen (12), wobei die zweiten Brettteile (11b) entlang der Längenrichtung (14) der ersten Brettteile (11a) versetzt angeordnet sind, und wobei die zweiten Brettteile (11b) insbesondere mit zwei ersten Brettteilen (11a) verklebt werden, sodass ein Endlosbrett (15) gebildet wird,
v. einer Ablängstation zum Ablängen des Endlosbretts (15) zum Bilden von Endlosbrett-Teilen (16), insbesondere zum Bilden von Endlosbrett-Teilen (16) mit einer vorbestimmten Länge,
vi. eine zweite Schneidstation zum Anfertigen von Längsschnitten in den Endlosbrett-Teilen (16), wobei die Längsschnitte entlang der Dickenrichtung (17) der Endlosbrett-Teile (16) verlaufen, zum Bilden der Stäbe (6), wobei die Stäbe (6) zweite Schnittflächen (21) aufweisen,
b. eine Aufteilstation zum Anordnen der Stäbe (6) zum Bilden eines Stabteppichs (18), wobei benachbarte Stäbe (6), insbesondere lose, aneinanderstoßen oder zueinander beabstandet sind, und wobei die zweiten Schnittflächen (21) an der Oberseite (22) und/oder an der Unterseite (23) des Stabteppichs (18) liegen,
c. eine Pressstation zum Verbinden, insbesondere Verleimen oder Verkleben, des Stabteppichs (18) mit einer Deckschicht (2) auf der Oberseite (22) des Stabteppichs (18), sodass der Stabteppich (18) an der Deckschicht (2) angeordnet ist und die Stabilisierungslage (3) der Parkettdiele (1) bildet.

14. Anlage nach Anspruch 13, **dadurch gekennzeichnet, dass** die Presstation ferner zum Verbinden, insbesondere Verleimen oder Verkleben, des Stabteppichs (18) mit einer Tragschicht (4) auf der Unterseite (22) des Stabteppichs (18) eingerichtet ist.

15. Anlage nach Anspruch 13 oder 14, **dadurch gekennzeichnet, dass** die Pressstation eine Flachpresse und/oder eine Walzenpresse umfasst.

16. **Verfahren** zur Herstellung eines Endlosbretts (15) umfassend folgende Schritte:
a. Bereitstellen von Brettern (9) aus Holz, insbesondere aus Massivholz,
b. Anfertigen von Längsschnitten in den Brettern (9), wobei die Längsschnitte entlang der Breitenrichtung (10) der Bretter (9) verlaufen, zum Bilden von zwei Brettteilen (11a, 11b) pro Brett (9), wobei jeder der Brettteile (11a, 11b) eine erste Schnittfläche (12) aufweist,
c. in Längenrichtung (14) aneinandergereihtes Anordnen der ersten Bretteile (11a) derart, dass jeweils zwei erste Brettteile (11a) mit ihren Stirnseiten (13) aneinanderstoßen,
d. Verkleben der zweiten Bretteile (11b) mit den ersten Bretteilen (11a) mit zueinander weisenden ersten Schnittflächen (12), wobei die zweiten Brettteile (11b) entlang der Längenrichtung (14) der ersten Brettteile (11a) versetzt angeordnet sind, und wobei die zweiten Brettteile (11b) insbesondere mit zwei ersten Brettteilen (11a) verklebt werden.

17. Verfahren nach Anspruch 16, **dadurch gekennzeichnet, dass** die Faserrichtung (19) des Holzes der Bretter (9) im Wesentlichen parallel zur Längenrichtung (14) der Bretter (9) verläuft, und/oder dass die Breite des Endlosbretts (15) im Wesentlichen der Breite der Bretter (9) entspricht.

18. Verfahren nach Anspruch 16 oder 17, **dadurch gekennzeichnet, dass** zum Verkleben der Brettteile (11a, 11b) ein Schmelzkleber verwendet wird.

19. Verfahren nach Anspruch 18, **dadurch gekennzeichnet, dass** das zum Verkleben der Brettteile (11a, 11b) verwendete Klebemittel auf die erste Schnittfläche (12) aufgebracht wird, und dass die ersten und zweiten Brettteile (11a, 11b) nach dem Aufbringen des Klebemittels, insbesondere mit einer Walzenpresse, verpresst werden.

20. Verfahren nach einem der Ansprüche 16 bis 19, **dadurch gekennzeichnet, dass** in dem Endlosbrett (15) ein erster Brettteil (11a) mit einem zweiten Brettteil (11b) verklebt ist, wobei die Brettteile (11a, 11b) aus demselben Brett (9) stammen.
